# EUROPÄISCHE PATENTSCHRIFT

(11) **EP 1 144 312 B1**
(45) Veröffentlichungstag und Bekanntmachung des Hinweises auf die Patenterteilung: **20.10.2004**
(21) Anmeldenummer: 99965480.9
(22) Anmeldetag: 16.12.1999
(51) Int. Cl.: B09C 1/00

(54) **VERFAHREN UND REAKTOR ZUR DEKONTAMINATION VON GRUNDWASSER**
METHOD AND REACTOR FOR DECONTAMINATING GROUNDWATER
PROCEDE ET REACTEUR POUR LA DECONTAMINATION D'EAUX SOUTERRAINES

(30) Priorität: 17.12.1998 DE 19860129
(43) Veröffentlichungstag der Anmeldung: 17.10.2001
(73) Patentinhaber: UFZ-UMWELTFORSCHUNGSZENTRUM Leipzig-Halle GmbH, 04318 Leipzig (DE)
(72) Erfinder: WEISS, Holger, D-04457 Bahlsdorf (DE); TEUTSCH, Georg, D-72827 Wannweil (DE)
(74) Vertreter: Hengelhaupt, Jürgen, Dipl.-Ing.
(86) Internationale Anmeldenummer: PCT/EP1999/010011
(87) Internationale Veröffentlichungsnummer: WO 2000/035812

(56) Entgegenhaltungen:
- DE-A- 19 715 038
- DE-C- 4 001 011
- DE-C- 4 425 061

## Beschreibung

Die Erfindung betrifft ein Verfahren und einen Reaktor zur Dekontamination von Grundwasser gemäß den Oberbegriffen der Ansprüche 1 und 6.

Es sind bereits eine Vielzahl von Verfahren zur Dekontamination von Grundwasser bekannt.

In der DE 44 25 061 C1 wird ein permeables Behandlungsbett zur Reinigung kontaminierter Grundwasserströme in situ als quer zur Grundwasserströmung errichteter, sich bis unter die Grundwassersohle erstreckender, mit einem die Grundwasserbelastungsstoffe aus dem Wasser entfernenden oder im Wasser umwandelnden Füllgut zu beschickender Graben beschrieben. Innerhalb und entlang des Grabens ist eine für das Grundwasser durchlässige Doppelwand vorgesehen, die in ihrem Zwischenraum das Füllgut enthält. Durch die Länge der Reinigungsstrecke innerhalb der Doppelwand ergibt sich eine mehr oder weniger ausreichende Kontaktzeit des Grundwassers mit dem Füllgut. Das Grundwasser wird nicht selektiv, sondern in der Gesamtmenge innerhalb der bautechnischen Maßnahme erfaßt, behandelt und wieder abgegeben.

In der DE 42 21 198 C2 wird ein Verfahren zum Entfernen von wasserlöslichen sorbierbaren Schadstoffen aus einem abströmenden Grundwasser in den Sedimenten der Umgebung eines Kontaminationsherdes mit Hilfe einer Schmalwand beschrieben. Dabei wird in den Weg des abströmenden Grundwassers ein Schlitz in die Sedimente eingebracht, der mit Sorptionsmaterial verfüllt wird. In dem Weg des abströmenden Grundwassers wird in Strömungsrichtung hinter dem ersten Schlitz ein zweiter Schlitz in die Sedimente eingebracht und mit Sorptionsmaterial verfüllt sobald das Sorptionsmaterial in dem ersten Schlitz bis in den Bereich der Sättigung beladen ist. Dieser Vorgang wird beliebig fortgesetzt.

In der WO 91/08176 wird ein Verfahren zur Säuberung von mit chlorierten bzw. mit halogenhaltigen organischen Stoffen (CKW) kontaminiertem Grundwasser beschrieben.

Es wird dazu vorgeschlagen, das CKW-belastete Wasser für definierte Verweilzeiten durch hermetisch abgeschlossene Metallkörper zu schleusen und dabei jeglichen Sauerstoffzutritt zu vermeiden. Dazu wird vorgeschlagen, einen Sickergraben in der wasserführenden Schicht auszuheben und in diesen den Metallkörper einzubringen.

In der DE-A-197 15 038 werden eine wasserdurchlässige Filterwand und ein Verfahren zur Herstellung der Filterwand zur in-situ-Grundwasserreinigung beschrieben, die nach dem "funnel-and-gate"-Prinzip arbeitet.

Die Anwendung der Filterwand ist an Voraussetzungen gebunden, die insbesondere keine Berücksichtigung der vertikalen Schadstoffverteilung und damit der Minimierung der abzureinigenden Wassermengen ermöglicht. Der Einsatz in größeren Tiefen ist nicht gegeben. Es handelt sich um eine rein passive Maßnahme.

Das Problem kontaminiertes Grundwasser zu reinigen, wird des weiteren in den Schriften US 5,534,154, US 5,487,622 und US 5,362,394 behandelt.

Bei allen bisher bekannt gewordenen Verfahren werden die gesamten bautechnisch erfaßten Aquiferbereiche behandelt und auf breiter Front wieder abgegeben. Die horizontale Durchströmung verlangt eine Baubreite, die die zum Schadstoffabbau notwendige Aufenthaltszeit ermöglicht. Es werden gate-, Schlitz- oder Grabenbreiten von zehn Metern und mehr erforderlich, die hohe Kosten verursachen.

Der Erfindung liegt daher die Aufgabe zugrunde, ein Verfahren und einen Reaktor der eingangs genannten Art zu entwickeln, mit denen eine kostengünstige und selektive Grundwasserentnahme aus beliebigen Horizonten zur selektiven und zuverlässigen Behandlung (Dekontamination) gewährleistet werden.

Erfindungsgemäß wird diese Aufgabe durch die Merkmale der Ansprüche 1 und 6 gelöst.

Nach der Erfindung wird das kontaminierte Grundwasser in einer beliebigen Höhe unterhalb des Grundwasserspiegels in einen Reaktor eingeleitet und durch eine Reaktionskammer mit mindestens einem Reaktionsmittel in Abhängigkeit von der gewünschten Aufenthaltsdauer geführt und als gereinigtes Grundwasser in einer gewünschten Höhe aus dem Reaktor abgeleitet, wobei die Höhe der Einleitung des Grundwassers in den Reaktor von der Schadstoffart und der Schadstofflage im Grundwasser gewählt wird.

Das kontaminierte Wasser durchströmt zur Dekontamination vertikal einen als Reaktor ausgebildeten Senkschacht mit darin eingebrachtem reaktiven Material.

Der Reaktor nach der Erfindung ist nach der bekannten Senkschacht-Technologie bis in die Sohle des Horizontes hinein eingebracht, der das kontaminierte Grundwasser führt.

Der Reaktor weist eine Reaktionskammer mit mindestens einer Zu- und mindestens einer Ableitung auf (Kiesmantelbrunnen, Abstromfahne). Die Reaktionskammer enthält mindestens ein Reaktionsmittel und reicht bis zur Reaktorsohle und ist unterhalb des Grundwasserspiegels verschlossen.

Die Kopplung der Senkschacht-Technologie mit bekannten Methoden der Sanierungstechnik bringt hydraulische Vorteile wie die Möglichkeit der selektiven Grundwasserentnahme aus nahezu beliebigen Horizonten in gewünschtem Umfang. Für eine Reihe von Schadensfällen ist diese Möglichkeit von großem Vorteil. Da sich Kontaminationen im Grundwasser häufig nicht gleichmäßig verteilen, sondern in bestimmten Horizonten konzentrieren, muß zur Dekontamination also nur dieser Teil des Grundwassers entnommen und behandelt werden. Zusätzlich kann das behandelte Grundwasser in beliebige Tiefenbereiche des Aquifers abgegeben werden.

Zur Erfassung von Schadstoffen, die schwerer als Wasser sind, wird nach einer Ausführungsform der Erfindung das Grundwasser dem Reaktor im unteren Bereich zugeführt und unterhalb des Grundwasserspiegels aus dem oberen Bereich des Reaktors als gereinigtes Grundwasser abgeleitet.

Zur Erfassung von Schadstoffen, die leichter als Wasser sind, zum Beispiel Öl, wird nach einer Ausführungsvariante der Erfindung das Grundwasser dem Reaktor im oberen Bereich unterhalb des Grundwasserspiegels zugeführt und auch wieder abgeleitet, nachdem das kontaminierte Grundwasser zur Erzielung einer längeren Aufenthaltsdauer im Reaktor entlang einer Zwischenwand, die im unteren Bereich des Reaktors offen ist, zunächst abwärts und danach aufwärts gerichtet geführt wurde.

Zur Erfassung von Schadstoffen, die sich im mittleren Bereich der Grundwassersäule befinden, zum Beispiel Schwebstoffe oder Schadstoffe in Inselbereichen aus zum Beispiel Ton/Lehm, wird nach einer weiteren Ausführungsform der Erfindung das Grundwasser dem Reaktor im mittleren Bereich zugeführt und entlang einer Zwischenwand nach unten und von dort entlang der Zwischenwand in den oberen Bereich des Reaktors geleitet und unterhalb des Grundwasserspiegels herausgeführt.

Bei der bisher bekannten "funnel-and-gate"-Schlitzoder Graben-Technologie werden hingegen die gesamten bautechnisch erfaßten Aquiferbereiche behandelt und auf breiter Front wieder abgegeben. Bei den bekannten Verfahren verlangt die horizontale Durchströmung eine Baubreite, die die zum Schadstoffabbau notwendige Aufenthaltszeit ermöglicht. Da die Durchströmungsgeschwindigkeit immer größer sein muß als die natürliche Grundwasserfließgeschwindigkeit und bei komplexen Schadstoffgemischen oder bei schwer zu metabolisierenden Stoffen Abbauzeiten von mehr als zehn Tagen benötigt werden, sind gate-, Schlitz- oder Grabenbreiten von zehn Metern und mehr erforderlich, die den Bau außerordentlich verteuern. Dasselbe gilt für die Tiefe der notwendigen Bauwerke. Bisher nach den bekannten Verfahren realisierte Bauwerke erreichen lediglich wenige Meter Tiefe. Durch das Verfahren nach der Erfindung lassen sich vertikale Durchströmungslängen (Aufenthaltszeiten) bis zur Differenz Brunnentiefe-Druckwasserspiegel realisieren, ohne daß dazu gepumpt werden müßte. Die Erfassung größerer Grundwasserströme kann durch die Verbindung mehrerer Brunnen durch undurchlässige Wände erreicht werden.

Vorteilhafte Weiterbildungen der Erfindung ergeben sich aus den Unteransprüchen.

Die Erfindung soll nachstehend an einem Ausführungsbeispiel eines Reaktors näher erläutert werden. In der zugehörigen Zeichnung zeigen:
- Fig. 1: eine schematische Darstellung des Reaktors nach der Erfindung in Arbeitsposition für Schadstoffe schwerer als Wasser,
- Fig. 2: eine schematische Darstellung des Reaktors nach Fig. 1 für Schadstoffe leichter als Wasser und
- Fig. 3: eine schematische Darstellung des Reaktors nach Fig. 1 für Schadstoffe im mittleren Bereich.

Zur Dekontamination von in unterschiedlichen Schichten befindlichem kontaminiertem Grundwasser 5 (Schadstofffahne) wird nach dem erfindungsgemäßen Verfahren das kontaminierte Wasser unmittelbar aus der kontaminierten Wasserschicht 5 über Zuleitungen (Horizontal-Drainage), zum Beispiel Kiesmantelbrunnen 3, in einen Senkschacht 1 mit darin befindlichem reaktiven Material 2 eingebracht, wobei der Senkschacht 1 vertikal durchströmt wird. Der Senkschacht 1 ist in den undurchlässigen Horizont 6 so eingebracht, daß seine Lage in Grundwasser-Fließrichtung 7 vor der Schadstoffahne 5 ist.

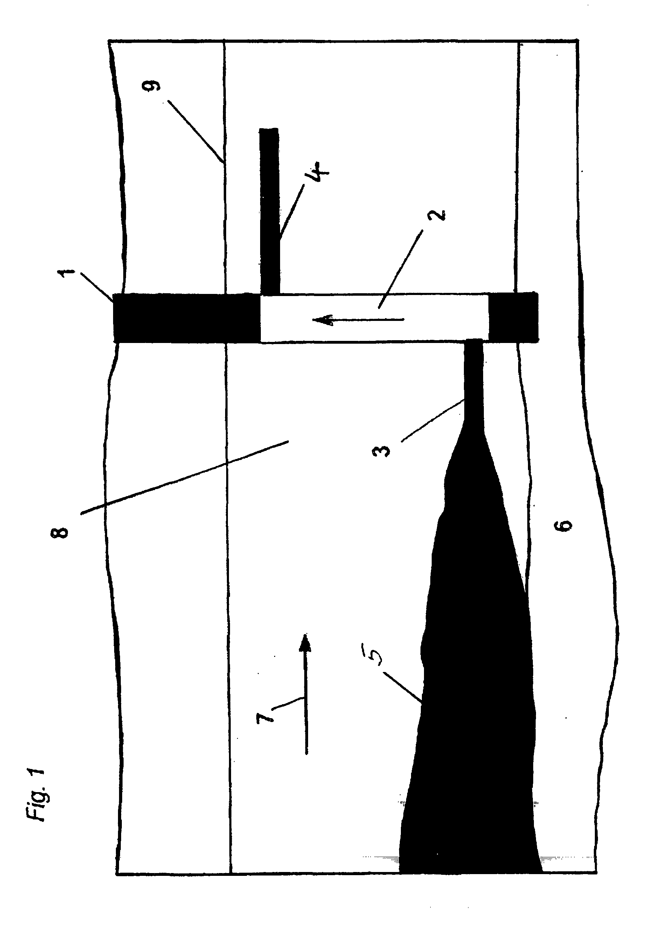

Die Fig. 1 zeigt in einer schematischen Darstellung die prinzipielle Ausführung eines Reaktors zur Durchführung des Verfahrens nach der Erfindung, bestehend aus dem Senkschacht 1 und dem darin eingebrachten reaktiven Material 2, für Schadstoffe, die schwerer als Wasser sind und sich demzufolge im unteren Teil des Aquifers befinden.

Der Senkschacht 1 des Reaktors wird beispielsweise aus Betonsegmenten der Höhe 2,5 m und einem Innendurchmesser von 3 m und einer Schachtteufe von 20 m gebildet und ist bis in den undurchlässigen Horizont 6 hinein gegründet. Der Senkschacht 1 ist mit reaktiven Materialien 2 wie Fe^{o} gefüllt und weist im unteren Bereich, im unmittelbaren Zielhorizont, Kiesmantelbrunnen 3 auf, die zum Beispiel 10 m lang in den Aquifer vorgetrieben sind. Über diese Wasserfassung im unteren Bereich der grundwasserführenden Schicht 8 wird das kontaminierte Grundwasser 5 aufgrund der hydraulischen Eigenschaften ohne Pumpen in den mit Reaktionsmaterialien 2 gefüllten Schacht 1 geleitet. Das zur Dekontamination zugeführte Grundwasser durchströmt vertikal (Pfeilrichtung) das Reaktionsmaterial 2 (entsprechend Dimensionierung) und wird anschließend im oberen Bereich der wasserführenden Schicht 8 infiltriert, d.h. unterhalb des Grundwasserspiegels 9 abgeleitet (Abstromfahne 4).

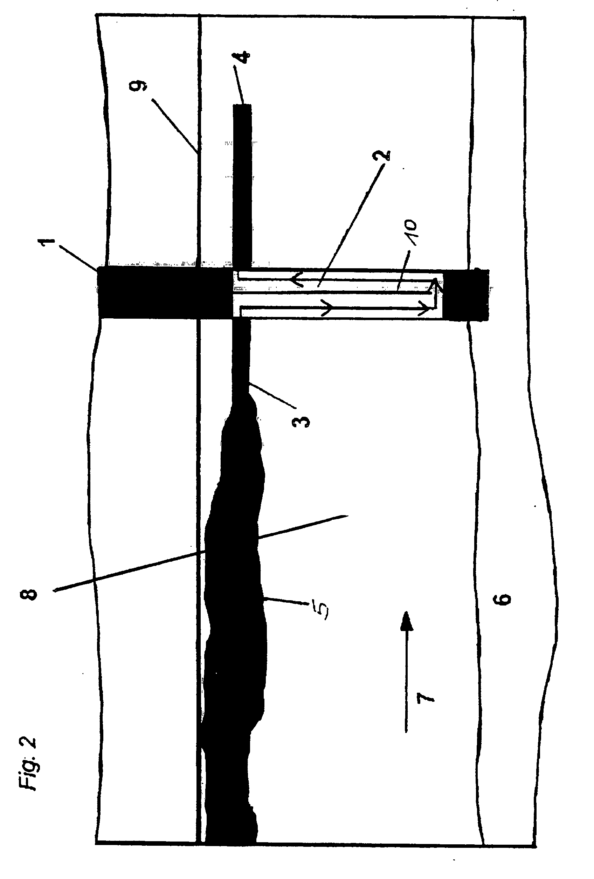

Die Fig. 2 zeigt in schematischer Darstellung die Ausbildung des Reaktors für eine Situation, bei der die Schadstoffe leichter als Wasser sind und demzufolge im oberen Bereich der wasserführenden Schicht 8 über horizontale Kiesmantelbrunnen 3 in den Reaktor eingeleitet werden.

Das kontaminierte Wasser 5 wird im Senkschacht 1 durch das reaktive Material 2 zunächst, eventuell mittels einer nicht dargestellten Pumpe, an einer im Bodenbereich des Senkschachtes 1 offenen Zwischenwand 10 vertikal nach unten und dann umgelenkt nach oben geführt und anschließend unterhalb des Grundwasserspiegels 9 ausgeleitet (Abstromfahne 4).

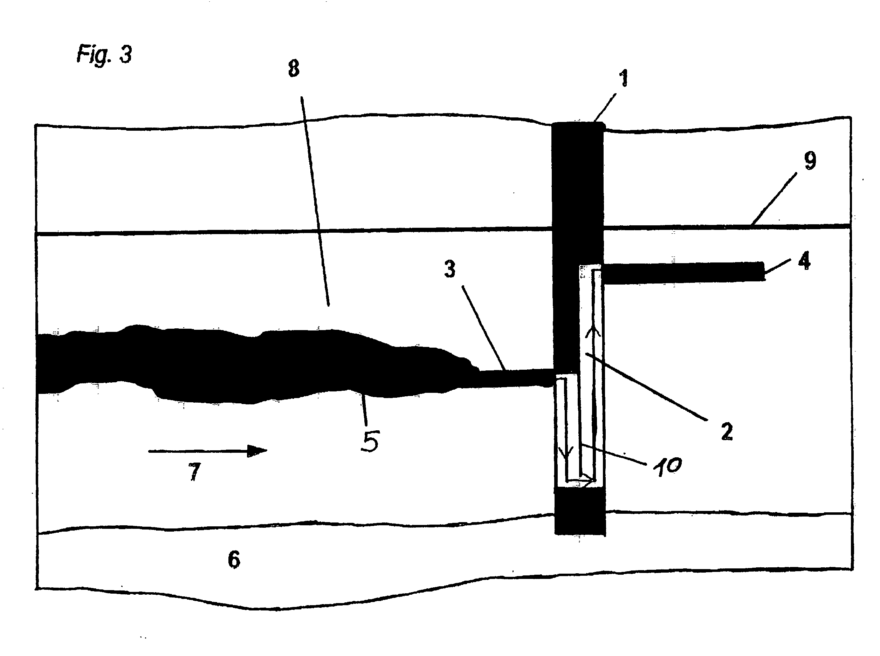

Die Fig. 3 zeigt in schematischer Darstellung die Ausbildung des Reaktors, bestehend aus dem Senkschacht 1 mit dem reaktiven Material 2 für den Fall, daß sich die Schadstoffe im mittleren Bereich der wasserführenden Schicht 8 befinden.

Vom Senkschacht 1 werden die horizontalen Kiesmantelbrunnen 3 unmittelbar in den Zielhorizont mit dem kontaminierten Wasser 5 getrieben, das kontaminierte Wasser 5 wird in den Senkschacht 1 geleitet und wie im Beispiel 2 durch das reaktive Material 2 des Senkschachtes 1 geführt und unterhalb des Grundwasserspiegels 9 herausgeleitet (Abstromfahne 4).

Der Einsatz von Pumpen ist nur in Ausnahmefällen dann notwendig, wenn der Eigendruck insbesondere bei ungespannten Grundwasserleitern nicht ausreicht.

Die Erfindung ist nicht auf die hier beschriebenen Ausführungsbeispiele beschränkt. Vielmehr ist es möglich, durch Kombination und Modifikation der beschriebenen Merkmale weitere Ausführungsvarianten zu realisieren, ohne den Rahmen der Erfindung zu verlassen.

### Bezugszeichenliste

- 1: Senkschacht
- 2: Reaktives Material
- 3: Kiesmantelbrunnen (Zuleitung,Horizontal-Drainage)
- 4: Abstromfahne (Ableitung)
- 5: Schadstoffahne (kontaminiertes Wasser)
- 6: Undurchlässiger Horizont
- 7: Grundwasser-Fließrichtung
- 8: Grundwasserführende Schicht
- 9: Grundwasserspiegel
- 10: Zwischenwand

## Patentansprüche

1. Verfahren zur Dekontamination von Grundwasser unter Verwendung von Reaktionsmittein,
wobei
das kontaminierte Grundwasser (5) unterhalb des Grundwasserspiegels (9) in einen Reaktor (1, 2) eingeleitet und durch eine Reaktionskammer (1) mit mindestens einem Reaktionsmittel (2) in Abhängigkeit von der gewünschten Aufenthaltsdauer geführt und als gereinigtes Grundwasser (4) in einer gewünschten Höhe aus dem Reaktor (1, 2) abgeleitet wird,
**dadurch gekennzeichnet, dass**
unter Verwendung der Senkrechtschacht-Technologie aus der Brunnen-Bohrtechnik die Herstellung von Horizontalfilterbrunnen erfolgt und die Höhe der Grundwassereinleitung in den Reaktor (1, 2) abhängig von der Schadstoffart und der Schadstofflage im Grundwasser (8) gewählt wird derart,
dass Schadstoffe, weiche leichter sind als Wasser, dem Reaktor (1, 2) im oberen Bereich unterhalb des Grundwasserspiegels (9) zugeführt werden, dass Schadstoffe, welche etwa gleich schwer sind wie Wasser und/oder welche in Wasser schweben und/oder welche durch undurchlässige Bodenbereiche an der Höhenveränderung gehindert werden, dem Reaktor im mittleren Bereich zugeführt werden und dass Schadstoffe, welche schwerer sind als Wasser, dem Reaktor (1, 2) im unteren Bereich zugeführt werden.

2. Verfahren nach Anspruch 1, **dadurch gekennzeichnet, daß** der Reaktor (1,2) vertikal bis in die Sohle des Horizontes hinein, der das kontaminierte Grundwasser (5) führt, eingebracht wird, wobei in dem für die Grundwassereinleitung vorgesehenen Bereich des Reaktors (1,2) mindestens eine perforierte Zuleitung (3) horizontal in das Grundwasser (8) herausgeführt wird, über die das kontaminierte Grundwasser (5) in den mit Reaktionsmittel (2) gefüllten Reaktor (1) einströmt.

3. Verfahren nach den Ansprüchen 1 und 2, **dadurch gekennzeichnet,**
**daß** zur Erfassung von Schadstoffen, die schwerer als Wasser sind, das Grundwasser dem Reaktor (1,2) im unteren Bereich zugeführt und unterhalb des Grundwasserspiegels (9) aus dem oberen Bereich des Reaktors (1,2) als gereinigtes Grundwasser (4) abgeleitet wird.

4. Verfahren nach den Ansprüchen 1 und 2, **dadurch gekennzeichnet,**
**daß** zur Erfassung von Schadstoffen, die leichter als Wasser sind, das Grundwasser dem Reaktor (1,2) im oberen Bereich unterhalb des Grundwasserspiegels (9) zugeführt und auch wieder abgeleitet wird, nachdem das kontaminierte Grundwasser (5) zur Erzielung einer längeren Aufenthaltsdauer im Reaktor (1,2) entlang einer Zwischenwand (10), die im unteren Bereich des Reaktors (1,2) offen ist, zunächst abwärts und danach aufwärts gerichtet geführt wurde.

5. Verfahren nach Ansprüchen 1 und 2, **dadurch gekennzeichnet,**
**daß** zur Erfassung von Schadstoffen, die sich im mittleren Bereich der grundwasserführenden Schicht (8) befinden, das Grundwasser dem Reaktor (1,2) im mittleren Bereich zugeführt, entlang einer Zwischenwand (10) nach unten geführt, dort entlang der Zwischenwand in den oberen Bereich des Reaktors (1,2) geleitet und unterhalb des Grundwasserspiegels (9) herausgeführt wird.

6. Reaktor zur Dekontamination von Grundwasser, wobei eine Reaktionskammer (1) zur Aufnahme mindestens eines Reaktionsmittels (2)bis zur Reaktorsohle reicht und unterhalb des Grundwasserspiegels (9) verschlossen ist und die Reaktionskammer (1) mindestens eine Zu- und mindestens eine Ableitung(3,4) unterhalb des Grundwasserspiegels (9) aufweist,
**dadurch gekennzeichnet, dass**
der Reaktor in der Art eines Senkrechtschachtes in Kombination mit einem Horizontalfilter-Brunnen ausgebildet ist, wobei mindestens eine Zuleitung für Schadstoffe, die leichter sind als Wasser, im oberen Bereich angeordnet ist und/oder mindestens eine Zuleitung für Schadstoffe, die gleich schwer sind wie Wasser und/oder welche in Wasser schweben und/oder welche durch undurchlässige Bodenbereiche an der Höhenveränderung gehindert werden, im mittleren Bereich angeordnet ist und/oder mindestens eine Zuleitung für Schadstoffe, die schwerer sind als Wasser, im unteren Bereich angeordnet ist.

7. Reaktor nach Anspruch 6, **dadurch gekennzeichnet,**
**daß** im Reaktor (1,2) mindestens eine nach oben oder nach unten offene Zwischenwand (10) eingebracht ist.

8. Reaktor nach Anspruch 6, **dadurch gekennzeichnet,**
**daß** mehrere Reaktoren (1,2) miteinander verbunden sind.

## Claims

1. Method for the decontamination of ground water with the use of reaction agents,
where
the contaminated ground water (5) below the ground water level (9) is conducted into a reactor (1, 2) and through a reaction chamber (1) with at least one reaction agent (2) in dependence of the required residence duration period and is discharged as cleansed ground water (4) in a desired height from the reactor (1, 2),
wherein,
with the use of the vertical shaft technology from the wells drilling technique, horizontal filter wells are produced and the height of the ground water routed into the reactor (1, 2) is selected depending on the type of pollutant and the location of the pollutant in the ground water (8) in such a way that
pollutants, which are lighter than water are led to the reactor (1, 2) in the upper zone below the ground water level (9), that pollutants which are equally as heavy as water and/or which suspend in water and/or which are hindered in the height change as a result of impermeable ground areas, are led to the reactor in the middle zone and that pollutants which are heavier than water are conducted into the reactor (1, 2) in the lower zone.

2. Method according to Claim 1, wherein the reactor (1,2) is located vertically into the bottom fond of the horizon carrying the contaminated ground water (5) where, in the zone of the reactor (1,2) envisaged for the ground water inlet, at least one perforated feed line (3) is led out horizontally into the ground water (8) by way of which the contaminated ground water (5) flows into the reactor (1) filled with reaction agent (2).

3. Method according to Claim 1 and 2, wherein
for the inclusion of pollutants which are heavier than water, the ground water is conducted to the reactor (1,2) in the lower region and is discharged below the ground water level (9) from the upper region of the reactor (1,2) as cleansed ground water (4).

4. Method according Claim 1 and 2, wherein,
for the coverage of pollutants which are lighter than water, the ground water is conducted to the reactor (1,2) in the upper region below the ground water level (9) and also discharged again after the contaminated water (5), for the purpose of achieving a longer residence duration period in the reactor (1,2), was first directed downwards and then upwards along an intermediate wall (10) which is open in the lower region of the reactor (1,2).

5. Method according to Claim 1 and 2, wherein,
for the coverage of pollutants which are in the middle region of the ground water carrying layer (8), the ground water is conducted to the reactor (1,2) in the middle region and directed along an intermediate wall (10) in a downward direction, and there along an intermediate wall into the upper region of the reactor (1,2) and withdrawn below the ground water level (9).

6. Reactor for the decontamination of ground water where a reaction chamber (1) serves the purpose of accommodating at least one reaction agent (2) and reaches to the reactor base and is closed off below the ground water level (9) and the reaction chamber (1) has at least one input line and at least one outlet line (3, 4) below the ground water level (9),
wherein
the reactor is executed in the type of a vertical shaft in combination with a horizontal filter well, where at least one input line for pollutants lighter than water is arranged in the upper zone and/or at least one input line for pollutants equally as heavy as water and/or which suspend in water and/or which are hindered in the height change as a result of impermeable ground areas, is arranged in the middle zone and/or at least one input line for pollutants heavier than water is arranged in the lower zone.

7. Reactor according to Claim 6, wherein in the reactor (1,2) at least one intermediate wall (10) is included which is open in the upward or in the downward direction.

8. Reactor according to Claim 6, wherein several reactors (1, 2) are connected up together.

## Revendications

1. Procédé pour la décontamination de la nappe d'eau souterraine basé sur la technologie de la foration verticale faisant partie de la technique de foration de puits, et sur la production de puits filtrants horizontaux et de réactants, l'eau souterraine contaminée (5) étant amenée vers un réacteur (1,2) à une hauteur quelquonque au dessous de la surface libre (9) de la nappe, puis envoyée au travers d'une chambre de réaction (1) contenant au moins un réactant (2) en fonction du temps de séjour désiré, et évacuée ensuite du réacteur (1,2), à une hauteur souhaitée, sous la forme d'une eau souterraine purifiée (4), la hauteur d'arrivée de l'eau souterraine vers le réacteur (1,2) étant choisie en fonction des caractéristiques des polluants ainsi que de l'emplacement des polluants dans l'eau souterraine (8).

2. Procédé selon la revendication 1,
**caractérisé en ce que** le réacteur (1,2) est introduit verticalement jusqu'au fond de l'horizon contenant l'eau souterraine contaminée, au moins une conduite d'alimentation perforée (3) se prolongeant horizontalement dans l'eau souterraine (8) dans la partie du réacteur (1,2) destinée à recevoir l'eau souterraine d'arrivée, à travers de laquelle l'eau souterraine contaminée (5) coule vers le réacteur (1) rempli du réactant (2).

3. Procédé selon les revendication 1 et 2,
**caractérisé en ce que**,
afin de saisir les contaminants plus lourds que l'eau, l'eau souterraine est livrée au réacteur (1,2) dans la partie inférieure et est évacuée sous forme d'eau souterraine purifiée (4), à partir de la partie supérieure du réacteur (1,2), au dessous de la surface libre (9) de la nappe d'eau souterraine.

4. Procédé selon les revendications 1 et 2, **caractérisé en ce que**,
afin de saisir les contaminants plus légers que l'eau, l'eau souterraine est livrée au réacteur (1,2) dans la partie supérieure, au dessous de la surface libre de l'eau souterraine, où il est évacuée, et ensuite, afin d'atteindre un temps de séjour plus long dans le réacteur (1,2), l'eau souterraine contaminée (5) est livrée d'abord vers le bas et ensuite vers le haut, le long d'une cloison (10), ouverte dans la partie inférieure du réacteur (1,2).

5. Procédé selon les revendications 1 et 2,
**caractérisé en ce que**, afin de saisir les contaminants se trouvant dans la partie centrale de la couche aquifère (8), l'eau souterraine est livrée au réacteur dans la partie centrale, puis vers le bas le long d'une cloison (10); ici-même elle est livrée le long de la cloison et vers la partie supérieure du réacteur (1,2) et par la suite est évacuée au dessous de la surface libre (9) de la nappe d'eau souterraine.

6. Réacteur pour la décontamination de la nappe d'eau souterraine, dans lequel une chambre de réaction (1) pour recevoir au moins un réactant (2) se prolonge jusqu'au pied du réacteur et est fermée au dessous de la surface libre (9) de l'eau souterraine, la chambre de réaction (1) ayant au moins une conduite d'alimentation (3) et au moins une conduite d'écoulement (4) au dessous de la surface libre (9) de l'eau souterraine,
**caractérisé en ce que**
le réacteur possède une construction du type d'un puits vertical en combination avec un puits filtrant horizontal, au moins une conduite d'alimentation pour les contaminants plus légers que l'eau étant disposée dans la partie supérieure et/ou au moins une conduite d'alimentation pour les contaminants d'un poids égal au poids de l'eau et/ou qui se maintiennent en suspension et/ou dont tout changement de hauteur est empêchée par des régions imperméables souterraines, étant disposée dans la partie centrale et/ou au moins une conduite d'alimentation pour les contaminants plus lourds que l'eau étant disposée dans la partie inférieure.

7. Réacteur selon la revendication 6, **caractérisé en ce qu'**au moins une cloison (10), ouverte vers le haut ou le bas, est disposée dans le réacteur (1,2).

8. Réacteur selon la revendication 6, **caractérisé en ce que** plusieurs réacteurs (1,2) sont reliés entre eux.
